# DEMANDE DE BREVET EUROPEEN

(11) **EP 1 439 701 A2**
(43) Date de publication de la demande: **21.07.2004**
(21) Numéro de dépôt: 03293100.8
(22) Date de dépôt: 10.12.2003
(51) Int. Cl.: H04N 7/24

(54) **Procédé et dispositif de décodage audio et vidéo, circuit pilote vidéo**

(30) Priorité: 20.12.2002 FR 0216326
(71) Demandeur: STMicroelectronics S.A., 92120 Montrouge (FR)
(72) Inventeur: Roelens, Frédéric, 75014 Paris (FR)
(74) Mandataire: Verdure, Stéphane

(57) **Abrégé**

Un procédé de décodage d'un ou plusieurs flux de données audio et d'un ou plusieurs flux de données vidéo obtenus à partir d'une ou plusieurs sources respectives, comprend les étapes consistant à :
a) charger des portions dudit flux de données audio et des portions dudit flux de données vidéo dans un ensemble de mémoires tampons (70) ;
b) fournir, à partir desdites mémoires tampons, des données audio et des données vidéo en entrée d'au moins un décodeur audio (130) et d'au moins un décodeur vidéo (131), respectivement ;
c) décoder lesdites données vidéo et lesdites données audio à l'aide dudit décodeur audio et dudit décodeur vidéo, respectivement.

## Description

La présente invention se rapporte aux circuits pilotes vidéo ("Video Driver Circuit", en anglais), c'est-à-dire les circuits assurant le décodage et l'affichage de programmes audiovisuels codés sous la forme d'un flux de données numériques codées selon une norme de compression déterminée.

Elle trouve des applications dans les décodeurs vidéo comportant une fonctionnalité d'enregistrement numérique personnel (PVR, de l'anglais "Personal Video Recorder"). Dans de tels décodeurs, un enregistrement de programmes est effectué sur un support numérique de stockage de masse (ou DSM, de l'anglais "Digital Storage Media") tel qu'un disque dur, une cassette vidéo numérique, un DVD ("Digital Versatile Disk"), etc...

Les décodeurs concernés sont notamment les boîtiers décodeurs ("Set-Top Box" en anglais) assurant l'interface entre une arrivée de signaux numériques diffusés en temps réel par satellite, par câble ou par diffusion numérique terrestre (ou DVB, de l'anglais "Digital Video Broadcasting") d'une part, et un téléviseur analogique d'autre part. Un tel boîtier décodeur est un appareil autonome ("Stand-alone"). Mais l'invention s'applique aussi aux décodeurs intégrés à un téléviseur numérique, ou à un appareil numérique de lecture/enregistrement tel qu'un lecteur de DVD, un lecteur de cassettes vidéo numériques ("Digital Video Cassette Recorder"), ou similaire.

Un boîtier décodeur reçoit un ou plusieurs programmes sous la forme d'un flux de données numériques compressées, c'est-à-dire dont les trames vidéo (i.e., les images) et les trames audio sont codées de manière à réduire le volume des données diffusées. Par exemple, ce codage respecte les spécifications de la norme MPEG-2 (ISO/IEC 13818-2) ci-après norme MPEG ("Motion Pictures Expert Group"). Cette norme définit une technique de compression de données pour le codage des images animées et du son (notamment pour la télévision numérique). Selon le vocabulaire de la norme MPEG, le flux de données numériques compressées est appelé flux de transport ("Transport Stream"). Ce flux contient des données audio en paquets et des données vidéo en paquets.

Dans la présente description, le terme "présentation", lorsqu'il est utilisé en relation avec un programme, désigne la restitution des données audio et vidéo décodées, sous forme respectivement audible et visible par un utilisateur. Le terme "lecture" ("playback" en anglais), utilisé en relation avec un programme, désigne plus spécifiquement le décodage et l'affichage du programme à partir d'un enregistrement du programme sur un disque dur. Le terme affichage ("display" en anglais) est plus particulièrement utilisé pour désigner la présentation des trames vidéo, alors que le verbe "jouer" est plus particulièrement utilisé pour désigner le fait de présenter des trames audio.

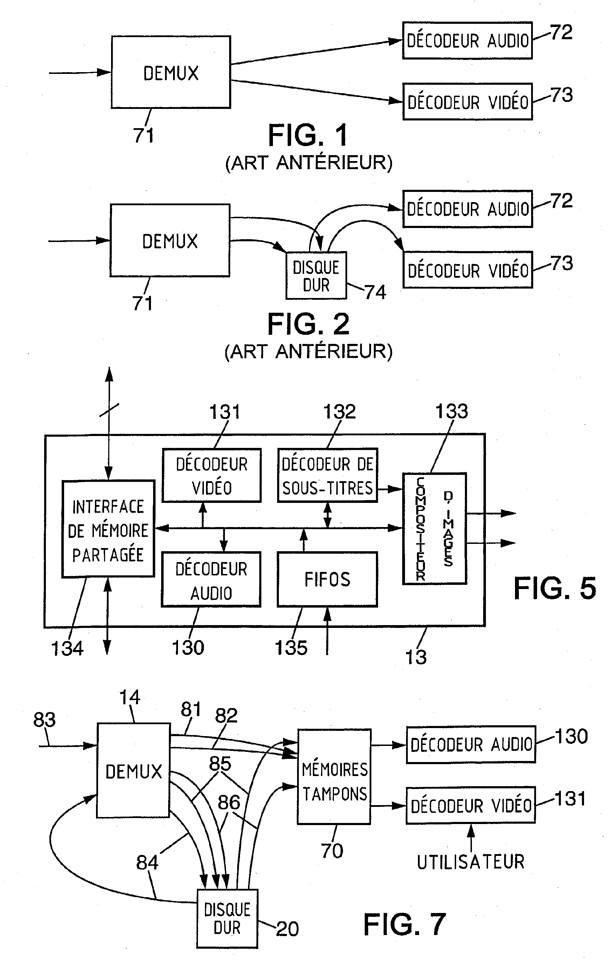

Le schéma de la figure 1 illustre le principe du décodage mis en oeuvre dans les premières générations de boîtiers décodeurs, qui n'incorporaient pas la fonctionnalité PVR. Un démultiplexeur 71 reçoit un ou plusieurs flux de transport, transmis en temps réel via un canal de transmission déterminé (satellite, câble, DVB). Il assure le démultiplexage (et éventuellement le désembrouillage) de ce flux, et délivre un flux de paquets de données audio et un flux de paquets de données vidéo. Le flux de paquets de données audio est transmis à un décodeur audio 72 pour décodage audio, alors que le flux de paquets de données vidéo est transmis à un décodeur vidéo 72 pour décodage vidéo. Dit autrement, le démultiplexeur joue le rôle de source des données à décoder.

Le schéma de la figure 2, sur laquelle les mêmes éléments qu'à la figure 1 portent les mêmes références, illustre un principe de décodage mis en oeuvre dans ceux des boîtiers décodeurs connus qui offrent la fonctionnalité PVR. Les flux de paquets de données audio et de paquets de données vidéo délivrés par le démultiplexeur 71, peuvent être stockés sur un support numérique de stockage de masse 74 tel qu'un disque dur. Puis, à partir du disque dur 74, ils peuvent être fournis en entrée du décodeur audio 72 et du décodeur vidéo 73, respectivement, pour décodage. Dans ce cas, un chapitre de la norme MPEG préconise de faire jouer au disque dur le rôle de source des données à décoder.

Pour les nouvelles générations de boîtiers décodeurs, le disque dur permet d'offrir un certain nombre de fonctionnalités, notamment :
- le décodage et la présentation d'un programme diffusé en temps réel et l'enregistrement simultané sur le disque dur d'un autre programme diffusé en temps réel, tous deux contenus dans un ou plusieurs flux de transport reçu(s) par le boîtier décodeur ;
- l'enregistrement d'un programme diffusé en temps réel lors de l'appui sur la touche "Pause" en cours de présentation, puis la reprise sans interruption de la présentation avec un différé ("Time Shift" en anglais), par lecture du programme sur le disque dur, lors de l'appui sur la touche "Lecture" ;
- le chargement de programmes embrouillés selon le modèle dit "du pousser" ("Push mode", en anglais) qui ne sont rendus accessibles qu'après, par exemple, l'acquittement par l'utilisateur des droits d'accès correspondant (pour la vidéo à la demande) ;
- la mise en oeuvre de modes de lecture évolués ("trick modes", en anglais), c'est-à-dire une lecture à une vitesse différente d'une vitesse nominale (x1) en marche avant, notamment l'avance rapide ("fast forward") et la lecture en marche arrière ("rewind") à vitesse accélérée ou non ;
- etc...

Le traitement d'un flux de transport comprend essentiellement deux tâches : d'une part la préparation des données à décoder et leur fourniture à un décodeur MPEG ; et d'autre part le décodage et la présentation des images et de l'audio, qui sont réalisés par le décodeur MPEG.

La norme MPEG a été conçue en postulant que c'est la source de données qui définit le cadencement du traitement et fournit l'horloge de référence. Pour l'affichage de programmes diffusés en direct, ce cadencement est ainsi imposé au décodeur MPEG par le démultiplexeur qui assure le démultiplexage du flux de transport. Le flot d'images est présent dans le flux de paquets de données vidéo dans un ordre approprié pour le décodage en temps réel et l'affichage à la vitesse nominale. Le système de référence temporel est alors basé sur les références d'horloge de programme ("Program Clock Reference" ou PCR) présentes dans le flux de transport. Des estampilles temporelles de présentation ("Presentation Time Stamp" ou PTS) également présentes dans le flux de transport, permettent en outre la synchronisation des flux de trames audio et de trames vidéo. La priorité pour le processus de décodage est de garantir que les contraintes de temps réel sont respectées, et qu'aucune ressource matérielle (par exemple une file ou une mémoire tampon) n'est en situation de dépassement de capacité ("overflow").

Dans le cas de la lecture d'un programme à partir du disque dur, il résulte de la préconisation précitée de la norme MPEG que c'est la lecture des données sur le disque dur qui doit cadencer le traitement des données à décoder. Toutefois, les données peuvent arriver à vitesse variable, en fonction des accès au disque dur qui sont réalisés, ces accès pouvant être effectués en mode rafale ("Burst Mode" en anglais). Dit autrement, la notion de temps réel est perdue. D'un autre côté, on observe que le disque dur constitue en lui même une mémoire tampon qui peut compenser les situations de dépassement de capacité.

En outre, il peut être souhaitable de pouvoir réaliser le décodage en parallèle de plusieurs flux correspondant à plusieurs programmes respectifs (fonctionnalité dite de "multi-décodage"), même avec un seul décodeur MPEG. Notamment, cela permet la transition d'une présentation en temps réel à une lecture sur disque dur sans perte de temps due à une réinitialisation du décodeur MPEG (qui peut prendre plusieurs secondes). D'une façon plus générale, cela permet la mise bout à bout de deux séquences de programme sans artefact, notamment pour l'insertion en douceur dans un programme de spots publicitaires pré-enregistrés ou autres (fonctionnalité dite "Seamless Splicing").

Dans certains cas, il est aussi souhaitable de pouvoir utiliser plusieurs décodeurs MPEG pour le décodage et l'affichage de plusieurs programmes simultanément, et/ou pour l'affichage d'un programme en même temps que l'affichage d'une image fixe.

Enfin, la mise en oeuvre de modes de lecture évolués est pénalisée par les aspects de temps réel qui contraignent le décodage selon la préconisation précitée de la norme MPEG.

C'est pourquoi l'invention a pour objet de proposer un principe de décodage permettant de pallier les inconvénients et/ou d'atteindre tout ou partie des buts précités.

A cet effet, un premier aspect de l'invention propose un procédé de décodage selon la revendication 1.

Les portions de flux de données audio et de flux de données vidéo qui sont chargées dans les mémoires tampons sont de préférence des portions de flux de données en paquets, et/ou des portions de flux de données en clair (c'est-à-dire désembrouillées).

Le pré-tamponnement ("Pre-Buffering", en anglais) résultant du passage des flux dans les mémoires tampons entre la ou les sources des données à décoder (qui sont le démultiplexeur et/ou le disque dur) et les consommateurs de données (c'est-à-dire le ou les décodeurs audio, et le ou les décodeurs vidéo), permet de rompre avec le processus de traitement tel qu'il est mis en oeuvre dans les circuits pilotes vidéo de l'art antérieur. Il permet ainsi d'atteindre les buts de l'invention, d'une façon qui apparaîtra à la lecture de la description détaillée qui va suivre.

Le fait que les mémoires tampons soient chargées selon le modèle du tirer évite le risque de dépassement de capacité de ces mémoires. Le fait qu'elles soient déchargées selon le modèle du pousser garantit la fourniture des données en entrée des décodeurs. Le fait que la gestion des mémoires tampons soit cadencée par le (ou les) décodeur(s) vidéo permet de réguler efficacement les flux de données à décoder, ce qui est particulièrement avantageux en mode de lecture sur le disque dur.

Un deuxième aspect de l'invention concerne un dispositif de décodage selon la revendication 10.

Un troisième aspect de l'invention concerne un circuit pilote vidéo comprenant un dispositif selon le deuxième aspect.

Enfin, un quatrième aspect de l'invention concerne un boîtier décodeur comprenant un circuit selon le troisième aspect.

D'autres caractéristiques et avantages de l'invention apparaîtront encore à la lecture de la description qui va suivre. Celle-ci est purement illustrative et doit être lue en regard des dessins annexés sur lesquels :
- la figure 1 et la figure 2, déjà analysées, sont des schémas qui illustrent le principe du décodage d'un flux de paquets audio et d'un flux de paquets vidéo selon l'art antérieur ;
- la figure 3 est un schéma simplifié d'un exemple de boîtier décodeur incorporant un circuit selon l'invention ;
- la figure 4 est un schéma illustrant un exemple d'architecture matérielle d'un circuit selon l'invention ;
- la figure 5 est un schéma montrant le détail d'un exemple de décodeur audio/vidéo compris dans le circuit de la figure 4 ;
- la figure 6 est un schéma illustrant un exemple d'architecture logicielle des moyens assurant l'enregistrement et la lecture de programmes sur le disque dur ; et,
- la figure 7 est un schéma qui illustre le principe du décodage d'un flux de paquets audio et d'un flux de paquets vidéo selon l'invention.

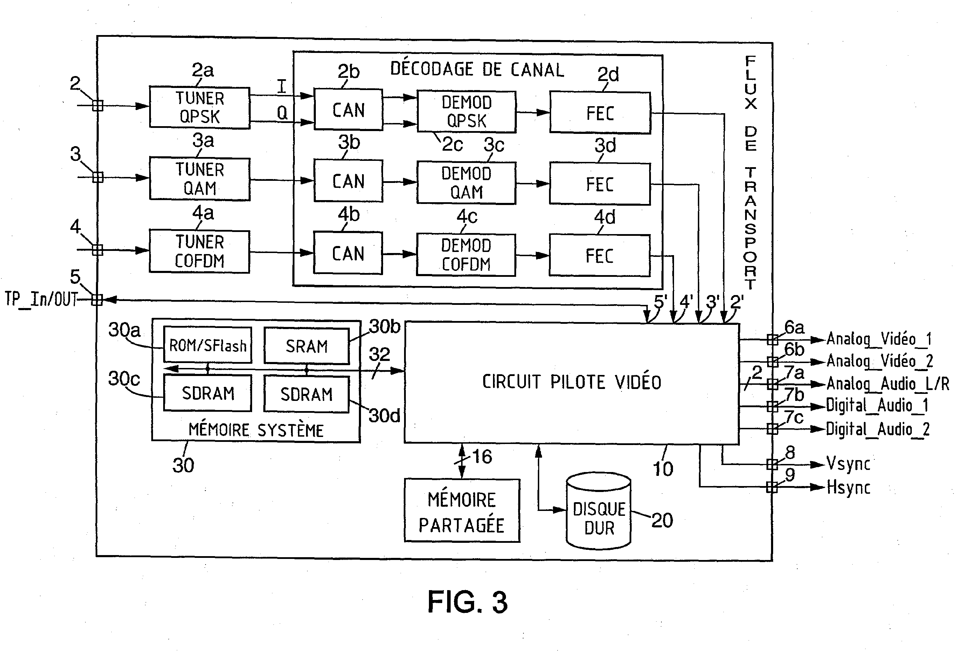

La figure 3 est un schéma fonctionnel d'un boîtier décodeur 1 incorporant un circuit pilote vidéo selon l'invention. Le boîtier 1 comprend par exemple des entrées telles que 2, 3 et 4, une entrée/sortie 5, et des sorties telles que 6a, 6b, 7a, 7b, 7c, 8 et 9.

L'entrée 2 est destinée à être connectée à une antenne parabolique pour la réception d'un signal numérique de télévision par satellite. L'entrée 3 est destinée à être reliée à une fibre optique pour recevoir un signal numérique de télévision par câble. L'entrée 4 est destinée à être reliée à une antenne pour recevoir un signal numérique de télévision par diffusion terrestre (DVB). Enfin, l'entrée/sortie 5 est destinée à recevoir ou délivrer un flux de paquets de transport (audio ou vidéo) respectivement TP_In ou TP_Out provenant d'un autre équipement, par exemple un lecteur de DVDs, ou destiné à un autre équipement, respectivement.

La sortie 6a délivre un signal analogique vidéo Vidéo_Out, qui est un signal codé au format RVB, YUV, Y/C (signal S-vidéo), ou CVBS ("Composite Video Baseband Signal"), et est destinée à être reliée à l'entrée vidéo d'un téléviseur. La sortie 6b délivre quant à elle un signal équivalent qui est par exemple un signal CVBS ou Y/C.

La sortie 7a délivre des signaux analogiques audio Audio_Out_L et Audio_Out_R destinées à être fournis à des entrées analogiques audio, respectivement gauche et droite, du téléviseur. Les sorties 7b et 7c délivrent des signaux numériques audio, par exemple codés au format SP_DIF et PCM, respectivement.

De plus, les sorties 8 et 9 délivrent respectivement un signal Vsync de synchronisation verticale et un signal Hsync de synchronisation horizontale de l'affichage des images, et sont destinées à être reliées à des entrées correspondantes du téléviseur.

Pour assurer la descente en fréquence des signaux numériques reçus sur les entrées 2, 3 et 4, le boîtier décodeur 1 comprend des tuners respectivement 2a, 3a, et 4a. Il comprend aussi des moyens assurant le décodage de canal des signaux reçus, qui comprennent par exemple, en aval de chacun des tuners 2a, 3a, et 4a :
- un convertisseur analogique numérique respectivement 2b, 3b et 4b ;
- un démodulateur respectivement 2c, 3c et 4c, assurant une démodulation respectivement QAM, QPSK et COFDM ; et,
- un filtre correcteur d'erreurs (FEC) respectivement 2d, 3d et 4d.

Les signaux fournis par ces moyens de décodage de canal sont des flux de transport ("transport stream") au sens de la norme MPEG. Ils contiennent chacun un multiplex de programmes audiovisuels, plus des données diverses telles que des sous-titres, des données de télétexte, et/ou des données d'utilisateur comprenant des informations sur la météo, la description des programmes, etc...

Le boîtier décodeur 1 comprend aussi un moyen numérique de stockage de masse 20, qui est ici un disque dur. En variante, il peut s'agir d'un DVD-Rom ou d'un DVD-Ram.

Le boîtier décodeur 1 comprend encore une mémoire système 30 et une mémoire partagée 31. Dans un exemple, la mémoire système 30 est une mémoire 32 bits qui comprend une mémoire ROM/SFlash 30a, une mémoire SRAM périphérique 30b, et deux mémoires SDRAM respectivement 30c et 30d. Dans un exemple, la mémoire partagée 31 est une mémoire 16 bits à 133 MHz (mégahertz) qui comprend une ou deux mémoires SDRAM de 16 Mbits (mégabits) ou une mémoire SDRAM de 64 ou 128 Mbits. De préférence, cette mémoire prend en charge les configurations 64 et 128 bits.

Le boîtier décodeur 1 comprend en outre un circuit pilote vidéo 10, qui a pour fonction d'effectuer le décodage et la présentation des images et de l'audio à partir des flux de transport reçus, mais aussi l'enregistrement d'un ou plusieurs programmes sur le disque dur 20, et la lecture d'un programme enregistré sur celui-ci.

Pour la présentation en temps réel et pour la lecture en différé d'un programme, le circuit pilote vidéo 10 assure le décodage de source, qui comporte notamment les fonctions de démultiplexage / désembrouillage, de décodage MPEG, de formatage des données vidéo en format PAL, SECAM ou NTSC, et de formatage des données audio numériques en format analogique. Il assure aussi l'enregistrement et la lecture des données sur le disque dur 20.

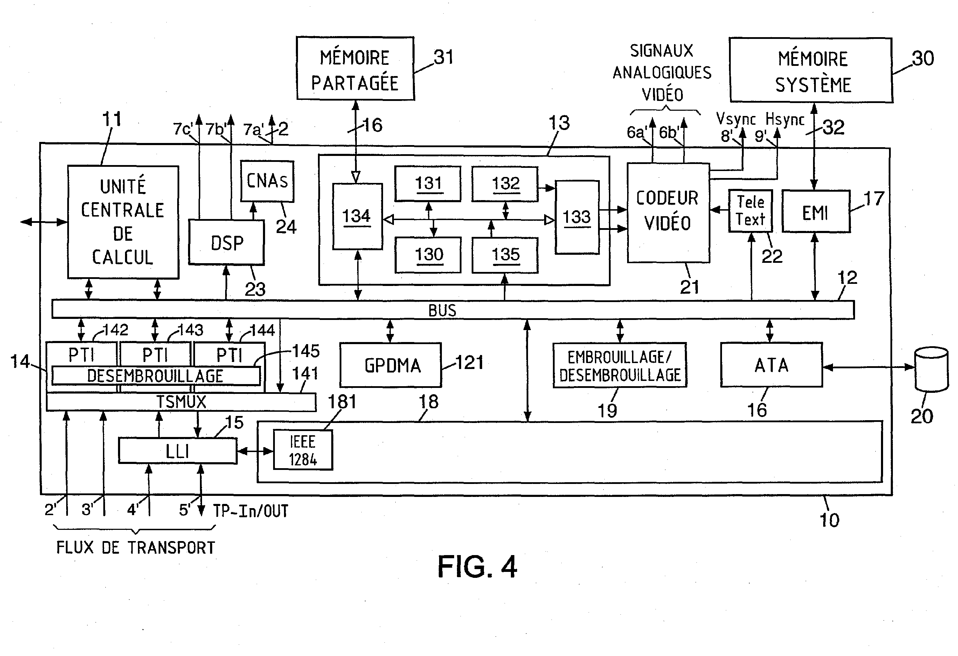

L'architecture matérielle du circuit 10 est détaillée sur le schéma de la figure 4.

Le circuit 10 comprend une unité centrale de calcul 11 qui est par exemple le circuit ST20 de STMicroelectronics. Il s'agit d'un processeur RISC 32 bits, cadencé à 166 MHz. Il comprend un coeur de processeur ("core" en anglais) du type ST20C2+ avec 8 Ko (kilo-octets) de cache d'instructions, 8 Ko de cache de données, et 8 Ko de mémoire SRAM embarquée.

Un plan d'interconnexion 12 (bus) tel que le bus de données connu sous le nom de STBus réalise l'interconnexion des différents éléments du circuit 10 devant communiquer avec l'unité 11. En variante, il peut s'agir du bus connu sous le nom de SuperHyway, notamment si l'unité 11 est basée sur un coeur de microprocesseur du type SH40 de STMICROELECTRONICS.

L'unité 11 est couplée de manière bidirectionnelle au bus 12.

En outre, un régisseur de DMA ("Direct Memory Access") à usage général ou régisseur GPDMA (de l'anglais "General Purpose DMA controller") 121 est couplé de manière bidirectionnelle au bus 12, pour régir les canaux matériels entre les différents éléments matériels du circuit 10. On rappelle qu'un DMA est un canal matériel entre deux entités matérielles ou logicielles du circuit.

Le circuit 10 comprend aussi un décodeur audio/vidéo 13, par exemple un décodeur MPEG-2 de type MP@ML ("Main Profile at Main Level"), doté de modes d'affichage évolués comme l'avance rapide ("fast forward"), et l'affichage en marche arrière en douceur ("smooth rewind").

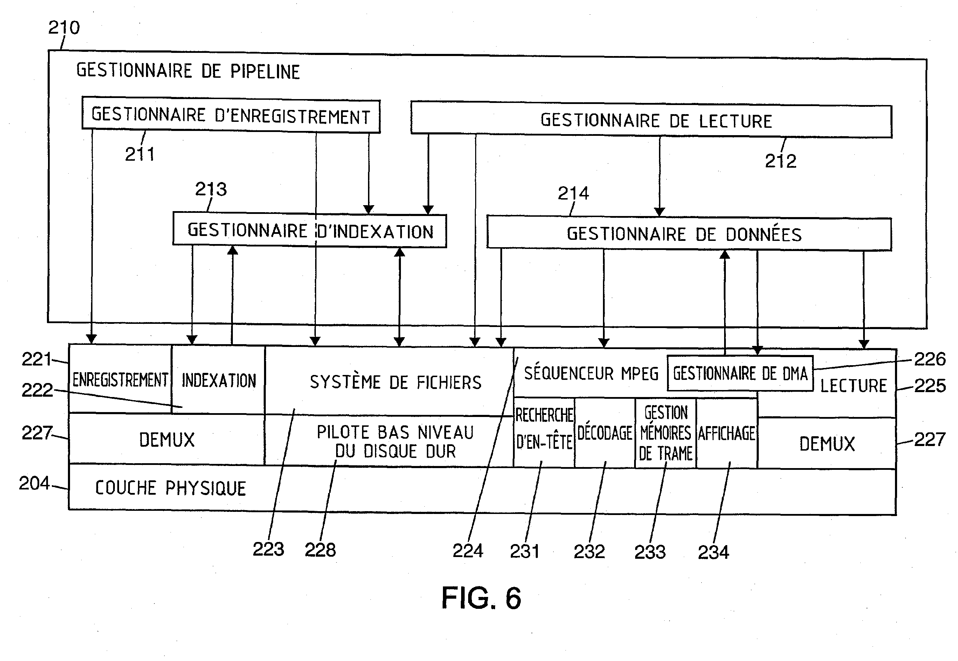

Ainsi qu'il est détaillé par le schéma de la figure 5, le décodeur 13 comprend, reliés en interne par un plan d'interconnexion ad-hoc :
- un décodeur audio 130 ;
- un décodeur vidéo 131 ;
- un décodeur de sous-titres 132 ;
- un compositeur d'affichage 133 pour gérer l'insertion des sous-titres avec en outre une fonctionnalité d'incrustation d'images ("On-Screen Display" ou OSD) sur 2-8 bits ;
- une interface de mémoire partagée 134 lui permettant de communiquer avec la mémoire partagée 31 du boîtier décodeur ; et,
- des mémoires tampons 135 de type FIFO ("First-In First-Out") aussi appelées CD_UNIT dans la norme MPEG.

L'interface 134 est couplée de manière bidirectionnelle, d'une part, à la mémoire partagée 31 qui est externe, et d'autre part au bus 12. Les mémoires tampons 135 sont aussi couplées au bus 12 pour recevoir les données à décoder.

De retour à la figure 4, le circuit 10 comprend aussi un décodeur 22 de données de télétexte relié au bus 12 pour recevoir les données à décoder.

Le circuit 10 comprend encore un codeur vidéo 21 ("Display Encoder" ou DENC), couplé au décodeur audio/vidéo 13. Le codeur vidéo 21 a pour fonction de formater les données vidéo décompressées au format PAL, SECAM ou NTSC, en fonction du type de l'écran du téléviseur. C'est pourquoi on l'appelle aussi codeur vidéo PAL/SECAM/NTSC. Il génère des signaux analogiques vidéo RGB, YUV, Y/C, et/ou CVBS qui sont délivrés sur des sorties 6a' et 6b' du circuit 10. Le codeur vidéo 21 génère aussi les signaux de synchronisation verticale et horizontale de l'affichage des images, respectivement Vsync et Hsync, qui sont délivrés sur des sorties respectivement 8' et 9' du circuit 10. On rappelle que ces signaux sont destinés à être fournis au téléviseur sur lequel le programme audiovisuel est présenté.

Les sorties 6a', 6b', 8' et 9' du circuit 10 sont destinées à être reliées aux sorties, respectivement 6a, 6b, 8 et 9 du circuit 1 (voir figure 3).

De plus, le circuit 10 comprend un bloc de transport 14 ayant un multiplexeur de flux de transport 141 (ou TSMUX), des interfaces de transport programmables ("Programmable Transport Interface" ou PTI), ici trois telles interfaces 142, 143 et 144, ainsi qu'un module de désembrouillage 145. Les PTI sont couplées de manière bidirectionnelle au bus 12. En outre, le multiplexeur 141 est couplé au bus 12 pour recevoir les données extraites du disque dur 20.

Les PTI ont pour fonction de traiter chacune un des flux de transport reçus via des entrées 2', 3' et 4' du circuit 10, ou lu sur le disque dur 20, ou bien encore le flux de paquets de transport TP_In (provenant de l'extérieur du boîtier 1) reçu via une entrée/sortie 5' du circuit 10. De façon avantageuse, le fait d'avoir plusieurs PTI (à savoir trois dans l'exemple représenté) permet le traitement simultané de plusieurs flux de transport distincts.

Les entrées 2', 3' et 4' et l'entrée/sortie 5' sont destinées à être reliées, dans le boîtier 1, aux entrées 2, 3 et 4 et à l'entrée/sortie 5, respectivement (voir figure 3).

Chacune des PTI 142, 143 et 144 assure un traitement ayant plusieurs fonctions. Tout d'abord elle assure la sélection des paquets de données d'un programme déterminé du flux de transport traité (démultiplexage) en générant des flux de paquets de transport correspondant chacun à un programme déterminé. Egalement, elle assure l'indexage du flux de paquets de transport c'est-à-dire l'étiquetage des évènements avec le numéro du paquet dans lequel ces événements se produisent. Le fait que l'interface soit programmable permet une implémentation flexible de cet indexage, en fonction notamment des exigences du fabriquant concernant l'accès conditionnel. Ensuite, chaque PTI oriente les paquets audio, vidéo, de télétexte et de sous-titres, vers le décodeur approprié. Enfin, elle assure le filtrage et l'acquisition des données de diffusion (tables), notamment les informations spécifiques de programme ("Program Specific Information" ou PSI).

Dans un exemple, chacune des PTI 142, 143 et 144 supporte un débit de 120 Mbits/s. Cela permet aisément le traitement d'un flux de 15 Mbits/s en vue d'un affichage en mode avance rapide à la vitesse x6 (c'est-à-dire six fois la vitesse nominale x1).

Le module de désembrouillage 145 assure le désembrouillage multiple des flux de transport traités par les PTI. Ce désembrouillage peut être réalisé selon un mode DVB, DES ou ICAM, par exemple.

Eventuellement, le bloc de transport 14 communique avec l'une au moins des entrées 2', 3' et 4' par l'intermédiaire d'une interface de bas niveau 15 ("Low Level Interface" ou LLI). L'interface 15 assure aussi l'interface entre le bloc de transport 14 et l'entrée/sortie 5' du circuit 10 via une interface parallèle/série, pour recevoir le flux de paquets de transport TP_In précité ou pour délivrer le flux de paquets de transport TP_Out également précité.

Le circuit 10 comprend aussi une interface 16 pour les accès au disque dur 20. Il s'agit par exemple d'une interface de type ATA ("AT Attachment"), aussi connue sous l'appellation ITE, par exemple une interface ATA-5. En variante, il s'agit d'une interface de type UDMA. Grâce à l'interface 15, le disque dur peut être accédé en écriture et en lecture par l'unité centrale de calcul 11 et par le régisseur GPDMA 121.

Le circuit 10 comprend aussi une interface de mémoire externe 17 ("External Memory Interface" ou EMI) pour communiquer avec la mémoire système 30.

Il comprend encore un ensemble 18 d'interfaces intégrées pour la communication avec des périphériques parmi lesquelles, par exemple, cinq UART, six bancs d'entrées/sorties parallèles, deux interfaces pour carte à puce, quatre canaux PWM ("Pulse Width Modulation"), un sérialiseur télétexte, un émetteur-récepteur infrarouge multi-canaux, et une interface modem analogique frontale (pour la connexion à Internet). Une interface 181 de type IEEE 1284 de l'ensemble 18 est aussi couplée à l'interface de bas niveau 15 pour permettre la réception et l'émission des flux respectivement TP_In et TP_Out via l'interface parallèle/série.

Egalement, un moteur 19 d'embrouillage / désembrouillage local des données respectivement enregistrées sur / extraites du disque dur 20 permet de gérer la sécurité contre le piratage des données stockées sur le disque dur. Dans un exemple, ce moteur réalise un embrouillage local des données enregistrées sur le disque dur, afin de garantir la fonctionnalité d'accès conditionnel et prévenir le piratage.

Enfin, le circuit 10 comprend un sous-système audio 23, avec un DSP ("Digital Signal Processor") 231, pour générer des signaux audio sous tous les formats audio courants. Ce sous-système 23 est relié à des sorties 7a', 7b' et 7c' du circuit 10, via un ensemble 24 de convertisseurs numériques-analogiques (CNAs) pour la sortie 7a' (avec un tel convertisseur pour chacune des voies gauche et droite).

Ainsi dans un exemple :
- la sortie 7a' délivre les signaux analogiques Audio_Out_L et Audio_Out_R présentés plus haut ;
- la sortie 7b' délivre un signal audio numérique de type connu sous le nom de PCM ("Pulse Code Modulation"), à savoir une forme de codage audio numérique non compressé qui est utilisée notamment dans les CD-Audio et les DVD ; et,
- la sortie 7c' délivre un signal audio numérique de type connu sous le nom de S/P DIF ("Sony/Philips Digital Interface"), à savoir un type de transmission audio numérique utilisant un connecteur coaxial.

Les sorties 7a', 7b', et 7c' du circuit 10 sont destinées à être reliées aux sorties respectivement 7a, 7b, et 7c du boîtier décodeur 1.

Le circuit pilote vidéo 10 est, par exemple, réalisé sous la forme d'un système sur une puce ("System On a Chip", ou SOC), avec la technologie à 0,18 microns. Il peut être intégré dans un boîtier de type PBGA388.

Le schéma de la figure 5 montre un exemple d'architecture logicielle des moyens du circuit pilote vidéo 10 qui assurent l'enregistrement et la lecture sur le disque dur 20. De façon classique, cette architecture est présentée selon un modèle en couches.

La couche la plus basse 204 est une couche physique correspondant à l'architecture matérielle du circuit 10, sur laquelle s'empile les différentes couches logicielles.

Les couches les plus hautes forment ce qui est appelé un gestionnaire de pipeline 210 ("Pipeline Manager"). Le gestionnaire de pipeline comprend un gestionnaire d'enregistrement 211 ("Record Manager"), un gestionnaire de lecture 212 ("Playback Manager"), un gestionnaire d'indexation ("Index Manager") 213, et un gestionnaire de données 214 ("Data Manager").

Les couches les plus basses (au dessous du gestionnaire de pipeline 210 mais au dessus de la couche physique 204) comprennent un module d'enregistrement 221, un module d'indexation 222, un système de fichiers 223, un séquenceur MPEG ("MPEG Scheduler") 224, et un module de lecture 225. De plus un gestionnaire de DMA ("DMA manager") 226 vient au dessus du séquenceur 224 et du module 225.

A la figure, les échanges de données unidirectionnels ou bidirectionnels et/ou les commandes entre les entités du gestionnaire de pipeline 210 entre elles ou entre ces entités et celles des couches les plus basses, sont symbolisés par des flèches verticales.

Les modules 221, 222 et 226 font appel à une couche inférieure 227 dite couche de démultiplexage à architecture micro-codée (ou "TC code", mis pour "Transport Controller Code"). Dit autrement, il s'agit du pilote ("Driver" en anglais) assurant la fonction de démultiplexage par un circuit programmable à base de micro-code.

Le système de fichier 223 s'appuie sur le logiciel pilote bas niveau 228 du disque dur ("HDD Low Level Driver").

Dans un exemple de mise en oeuvre de l'invention, le séquenceur 224 s'appuie sur quatre modules assurant, de façon distincte, quatre tâches respectives liées au décodage MPEG. Il s'agit d'un module de recherche d'en-tête 231, d'un module de décodage 232, d'un gestionnaire de mémoires de trame 233 et d'un module d'affichage 234.

On va maintenant décrire en détail le fonctionnement des modules 231 à 234 et 226, sachant que ces modules sont mis en oeuvre sous la forme de logiciels.

### Module de recherche d'en-tête 231

De préférence, les programmes sont stockés sur le disque dur 20 sous la forme embrouillée ("scrambled") d'origine, soit au niveau du flux de transport complet si tous les programmes multiplexés sont stockés ensembles, soit au niveau d'un flux de transport partiel si le flux de transport d'un seul programme est stocké. En variante, les programmes sont stockés sous la forme d'un flux élémentaire en paquets ("Packetized Elementary Stream" ou PES) comprenant les paquets de données audio, vidéo ou de données d'un seul programme. Dans tous les cas, aucune information d'indexation telle que l'emplacement des images, n'est enregistrée sur le disque dur. Le contenu du (ou des) programme(s) enregistré(s) est donc mieux protégé contre le piratage.

Néanmoins, cela implique la mise en oeuvre d'un mécanisme spécifique pour la lecture. Ce mécanisme a pour fonction d'analyser ("parse" en anglais) le contenu du flux enregistré sur le disque dur afin de déterminer l'emplacement des images, en détectant l'en-tête des paquets compris dans le flux. Ce mécanisme est mis en oeuvre par le module de recherche d'en-tête 231.

Un flux vidéo MPEG est composé de séquences MPEG, chacune composée de groupes d'images (GOP) au sens de la norme MPEG. Chaque GOP est composé d'images compressées. Chaque image est composée de tranches ("slices" en anglais). Chaque tranche est elle-même composée de macro-blocs de 16x16 pixels chacun. Enfin, chaque macro-bloc comprend six blocs de 8x8 pixels chacun.

Le module de recherche d'en-tête fonctionne d'une manière très proche de la fonctionnalité de recherche d'en-tête décrite dans la norme MPEG. Sa fonction principale est de copier dans des structures logicielles adaptées toutes les informations extraites des champs d'en-tête d'une séquence MPEG, jusqu'au niveau de la tranche.

Pendant le décodage, le module de recherche d'en-tête peut, en parallèle, d'une part, lire des données vidéo élémentaires entrées dans une mémoire tampon de flux élémentaire de type FIFO, et, d'autre part, détecter un code de démarrage ("Start Code") et signaler au séquenceur MPEG qu'un tel code a été détecté et que les données suivantes sont disponibles dans la mémoire tampon.

Les codes de démarrage qui sont détectés sont :
- le code de démarrage d'une image (code 0x00) ;
- le code de démarrage de la première tranche de l'image (code 0x01) ;
- tous les autres codes de démarrage hormis ceux des autres tranches de l'image (codes 0xB0 à 0xFF).

Dit autrement, le module de recherche d'en-tête détecte tous les codes de démarrage autres que les codes de démarrage de tranche excepté la première tranche d'une image (codes 0x02 à 0xAF).

L'algorithme du traitement mis en oeuvre par le module de recherche d'en-tête est très simple. Quand un code de démarrage est détecté, ce code de démarrage est analysé. On distingue alors trois cas :
- soit le code de démarrage est un code de la norme MPEG mais n'est pas un code parmi les codes 0x02 à 0xAF : alors le code de démarrage est stocké dans une structure logicielle adaptée, il est signalé que cette information a été reçue et est disponible, et il est procédé à la recherche d'un autre code de démarrage ;
- soit le code de démarrage n'est pas un code de la norme MPEG : il est alors signalé au séquenceur MPEG que quelque chose ne va pas, et il est procédé à la recherche d'un autre code de démarrage ;
- soit le code de démarrage est un code parmi les codes 0x02 à 0xAF : alors il est signalé au séquenceur MPEG que toutes les informations sont disponibles pour procéder au décodage d'une image (i.e., toutes les informations jusqu'au niveau de la tranche). On notera qu'il n'est pas, ensuite, automatiquement procédé à la recherche d'un autre code de démarrage. En effet, il appartient au séquenceur MPEG de commander la recherche d'une prochaine image. Ceci traduit le fonctionnement du séquenceur MPEG selon le modèle du tirer ("Pull Mode").

Les structures logicielles mentionnées plus haut sont celles décrites dans la norme MPEG, à laquelle le lecteur est invité à se reporter pour de plus amples informations. Une structure globale, ou structure principale de recherche d'en-tête contient la position du dernier code de démarrage détecté dans le flux ainsi qu'un drapeau ad-hoc pour signaler qu'une structure spécifique a été reçue ou non.

En plus de cela, le module de recherche d'en-tête comprend :
- des moyens pour localiser la position (i.e., l'adresse) d'un code de démarrage dans une mémoire tampon de flux élémentaire, à l'aide d'un compteur 24 bits qui est remis à zéro à chaque réinitialisation des mémoires tampons et qui indique le nombre d'octets du flux qui ont été analysés ;
- des moyens pour détecter qu'une discontinuité déterminée a été signalée à l'entrée de la mémoire tampon de flux élémentaire (par exemple lorsqu'on passe d'une source de flux de données codées à une autre, ou pendant un mode de lecture évolué) ;
- des moyens pour extraire des données d'utilisateurs spécifiques d'une séquence MPEG (qui sont détectées entre deux codes de démarrage déterminés) et pour les stocker dans une mémoire tampon particulière, dite mémoire tampon d'acquisition. Cette mémoire tampon d'acquisition est allouée dynamiquement afin de s'affranchir du fait que la taille des données d'utilisateur n'est pas définie à l'avance. Eventuellement, cette mémoire tampon d'acquisition peut être une mémoire circulaire, pour compatibilité avec les autres modules ; et,
- des moyens pour définir le type d'image à décoder et afficher, dans un protocole déterminé (appelé protocole d'affichage). Ces moyens ne sont pas indispensables, mais ils facilitent et définissent de manière appropriée la manière dont une image doit être décodée, synchronisée et affichée. Par type d'images, on entend par exemple, notamment, le fait qu'une image est progressive ou non, le nombre de champs qui doivent être affichés par image, la polarité des champs (jusqu'à trois champs au maximum, chaque champ pouvant être un champ supérieur ("Top Field") ou un champ inférieur ("bottom Field")), le nombre de vecteurs de recadrage ("Pan and Scan Vectors") valides contenus dans la trame (jusqu'à quatre au maximum), et la manière dont les vecteurs de recadrage sont reçus et doivent être utilisés. De façon avantageuse, le type d'image est défini par un paramètre unique, qui est une valeur d'entrée ("Entry Value") dans une table qui condense et unifie toutes les informations sur le type d'image.

### Module de décodage 232

La fonction principale de ce module est de générer chaque instruction pour décoder une image, à partir des informations d'en-tête qui ont été extraites par le module de recherche d'en-tête 231.

Le module 232 reçoit des appels uniquement du gestionnaire MPEG 224. Les principaux appels suivant vont maintenant être explicités :
- préparer une instruction de décodage, et demander la fourniture par le gestionnaire de mémoires de trames 233 de l'adresse d'une mémoire de trame où stocker l'image à reconstruire, ainsi que l'adresse de la (ou des) mémoire(s) de trame où est (sont) stockée(s) les images de référence nécessaires pour cette reconstruction ;
- stocker une instruction ;
- sauter une image ;
- réinitialiser le décodeur en cas de redémarrage ou en cas d'erreur de décodage fatale ;
- localiser et vérifier la position du décodeur, ainsi que la fin des données dans la mémoire tampon de flux élémentaire.

Concernant la préparation de l'instruction de décodage, des paramètres déterminés sont extraits des champs d'en-tête des paquets du flux de données et sont formatés selon le plan de registre ("Register Map") du décodeur. Il s'agit notamment du type du flux, à savoir MPEG-1 ou MPEG-2, des paramètres d'image horizontaux et verticaux, du type de codage d'image, de la largeur et de la hauteur de l'image en macro-blocs, etc.

Pour décoder une image, des mémoires de trame sont nécessaires, à savoir au minimum une mémoire tampon de reconstruction, une mémoire tampon avant et une mémoire tampon arrière (pour des images prédites de type P). C'est à ce stade que le module de décodage alloue l'image à décoder au gestionnaire de mémoire de trame 233. Comme le décodage n'a pas encore débuté, le gestionnaire 233 marque la mémoire tampon de reconstruction comme verrouillée et ne considère que l'image est disponible seulement lorsque le décodage est terminé. Si une erreur survient pendant le décodage, le gestionnaire 232 peut ne pas tenir compte de l'image dans la mesure où aucun autre processus ne peut l'utiliser. Le module de décodage 233 est certain d'obtenir une mémoire de trame lorsqu'il en demande une au gestionnaire 233. En effet, le séquenceur MPEG 224 s'assure qu'il y a au moins une mémoire de trame libre ou marquée comme telle dans le gestionnaire 233, avant de préparer l'instruction de décodage.

Egalement, le module de décodage 232 a pour fonction de vérifier que la mémoire RAM interne contient les bonnes tables de quantification. Dans les flux de données MPEG, trois types de table de quantification différents peuvent être utilisés : les tables par défaut, qui ne sont pas définies dans le flux ; les tables définies dans la séquence ; et les tables spécifiques pour chaque image. Si les bonnes tables ne sont pas disponibles, le module 232 réclame le rechargement des tables en établissant un drapeau à cet effet, ainsi qu'un pointeur sur la structure ad-hoc : les tables par défauts, la table dans l'extension de séquence ("Sequence Extension") ou la table dans l'extension d'image ("Picture Extension").

Concernant la localisation de la position du module de décodage à l'intérieur de la mémoire tampon de flux élémentaire, on notera que le processus mis en oeuvre est similaire à celui décrit pour le module de recherche d'en-tête 231, sauf que seule la position de la dernière donnée dans la mémoire tampon de flux élémentaire vidéo est donnée. Puisqu'il y a un autre compteur qui indique la taille de la mémoire tampon de flux élémentaire vidéo, il est ainsi possible d'obtenir une bonne estimation de la position du module de décodage.

Concernant le stockage d'instruction, il convient de noter que tous les paramètres requis sont stockés en même temps lorsque le séquenceur MPEG 224 demande que le processus de décodage démarre. Lorsque ce stockage est terminé, la tâche de décodage proprement dite est démarrée immédiatement, sans attendre un événement de synchronisation verticale. A noter que c'est alors qu'une nouvelle recherche d'en-tête est démarrée automatiquement, ce qui explique principalement que le module de recherche d'en-tête 231 n'est pas redémarré lorsqu'une nouvelle portion de flux de données audio ou vidéo est reçue dans la mémoire tampon de flux élémentaire.

De plus, avant de commencer le décodage proprement dit, la position du module de décodage est utilisée pour, d'une part vérifier que le module de décodage et l'information obtenue du module de recherche d'en-tête 231 sont en phase avec l'image que le module de décodage va décoder, et d'autre part, pour localiser approximativement la position de l'image, et pour l'associer avec la trame (ce qui peut être utilisé pour commencer à décoder en mode marche arrière, si les données sont toujours disponibles dans la mémoire tampon).

A propos maintenant du saut d'une image, on notera que lorsque le séquenceur MPEG 224 réclame le saut d'une image, cette action est immédiate et qu'une recherche d'en-tête est lancée en même temps pour maintenir la synchronisation des deux modules 231 et 232.

Concernant enfin la réinitialisation du module de décodage 232, on notera que, en cas de réinitialisation (complète ou partielle), tous les pointeurs de position dans la mémoire tampon de flux élémentaire vidéo sont réinitialisés en même temps. De plus, tous les registres mémoire sont laissés tels que et conservent donc le même contenu qu'auparavant. Ce n'est pas un problème dans la mesure où ils sont tous commandés lorsque c'est nécessaire. Aucun effet de bord n'a été constaté en pratique.

### Gestionnaire de mémoires de trame 233

Ce module a pour fonction de gérer des mémoires de trame utilisées pour le décodage des images. Lorsque les images du flux comprennent des images de type I (images intra codées), de type P (images prédites), et de type B (images prédites bidirectionnelles), il faut ainsi prévoir quatre mémoires de trames au minimum :
- une pour stocker l'image déjà décodée et qui est en cours d'affichage ;
- deux autres pour stocker les deux images de référence ("Predictors") nécessaires, au plus, pour reconstruire l'image à décoder ; et,
- la dernière pour stocker l'image à décoder, en cours de reconstruction.

Le gestionnaire de mémoires de trame 233 a aussi pour fonction de gérer l'ordre d'affichage des images, en fonction du sens de l'affichage (en marche avant ou en marche arrière). A cet effet, il implémente avantageusement une base de temps virtuelle, plutôt que d'utiliser une base de temps fondée sur les estampilles temporelles de présentation (PTS) associées aux trames vidéo, ce qui poserait de grandes difficultés lors de la lecture sur le disque dur.

La base de temps virtuelle est basée sur des références temporelles virtuelles respectivement associées à chaque trame vidéo, et affectées lorsque la trame vidéo arrive en entrée du décodeur 13. Ces références sont réalisées par un nombre codé par exemple sur 32 bits, dont la valeur est initialisée par exemple à h80000000 (80000000 en notation hexadécimale) à la réception d'une commande de lecture. Cette valeur d'initialisation permet de référencer l'équivalent d'environ une année de trames, en marche avant comme en marche arrière.

Ces références temporelles virtuelles sont aussi utilisées pour déterminer quelles trames sont les plus anciennes parmi celles stockées dans les mémoires de trames, afin de déterminer les mémoires de trame qui peuvent être écrasées lorsque c'est nécessaire.

En pratique, le gestionnaire de mémoires de trame 233 est réalisé sous la forme d'une table qui contient les informations essentielles pour le décodage et l'affichage des images. Ces informations sont :
- le nombre maximum (par exemple codé sur 8 bits) de mémoires de trames qui peuvent être gérées par le gestionnaire 233 ;
- tous les paramètres de l'image, tels que la largeur de l'image, la hauteur de l'image, la présence de PTS, la présence de vecteurs de recadrage ("Pan and Scan"), etc., arrangés selon une structure adaptée ;
- l'identificateur (i.e., un pointeur d'adresse, par exemple codé sur 8 bits) de la mémoire de trame contenant l'image décodée qui est en cours d'affichage ;
- l'identificateur (par exemple codé sur 8 bits) de la mémoire de trame contenant l'image de référence avant, le cas échéant (c'est-à-dire pour une image à décoder qui est de type P ou de type B) ;
- l'identificateur (par exemple codé sur 8 bits) de la mémoire de trame contenant l'image de référence arrière, le cas échéant (pour une image à décoder qui est de type B) ;
- l'identificateur (par exemple codé sur 8 bits) de la mémoire de trame destinée à contenir l'image en cours de reconstruction ;
- une référence temporelle virtuelle (par exemple codée sur 32 bits) associée à l'image en cours d'affichage ; et,
- des références temporelles virtuelles (par exemple codées sur 32 bits chacune) respectivement associées à chacune des images pouvant être contenues dans les mémoires de trames. Il y a donc un nombre de telles références temporelles virtuelles égal au nombre maximum de mémoires de trames. Ces références sont attribuées au moment du décodage. Elles permettent au module d'affichage 234 de savoir quelle image extraire des mémoires de trames pour afficher les images dans l'ordre correct.

### Module d'affichage 234

Ce module a pour fonction, essentiellement, de gérer la commande de l'affichage des images décodées, en assurant les conversions nécessaires entre les paramètres respectifs des images décodées et de l'écran d'affichage.

Les paramètres des images sont fournis au module 234 par le gestionnaire de mémoires de trame 233. Il s'agit notamment de la largeur et de la hauteur de l'image, de la position des mémoires tampons de luminance et de chrominance dans la mémoire, du protocole d'affichage, de la liste des vecteurs de recadrage ("Pan and Scan vectors"), de la zone d'affichage réduite définie par lesdits vecteurs, du rapport d'aspect de l'image (par exemple 4/3, au format PAL). A priori, les images décodées sont stockées dans les mémoires de trames en tant que macro-blocs au format 4:2:0.

Les paramètres de l'affichage sont fournis au module 234 par le codeur d'affichage 21 (figure 4), notamment. Ces paramètres comprennent en particulier la hauteur et la largeur de l'écran, l'offset de la zone affichable de l'écran, le rapport d'aspect de la zone affichable complète (par exemple 16/9), et l'intervalle de temps entre deux champs.

Mais le module 234 a aussi pour fonction de gérer l'entrelacement ou le désentrelacement ("Interleaving/de-interleaving") des images. En général, les images des programmes audiovisuels qui sont actuellement diffusés sont des images entrelacées.

Si l'écran d'affichage est un écran à entrelacement, et si la vitesse de lecture est la vitesse nominale (x1), il n'y a pas besoin de modifier l'entrelacement des trames. Il convient juste de vérifier que la polarité des trames correspond à celle de l'écran d'affichage.

Mais lorsque la vitesse de lecture est différente de la vitesse nominale, et/ou lorsque l'entrelacement des trames doit être modifié parce que les trames sont progressives, il est avantageux d'utiliser une base de temps virtuelle afin de gérer l'affichage des trames avec une bonne polarité.

### Module de gestion de mémoires tampons (Gestionnaire de DMA) 226

Le principe de la gestion des mémoires tampons de flux élémentaire qui assurent le pré-tamponnage des paquets de données audio et des paquets de données vidéo est illustré par le schéma de la figure 7.

Il est prévu un ensemble de mémoires tampons 70. Ces mémoires tampons sont adaptées pour stocker des portions d'un flux de données audio, ou des portions de d'un flux de données vidéo. C'est pourquoi on les appelle aussi mémoires tampons de flux élémentaire. On notera que les données stockées dans ces mémoires tampons sont des données codées, c'est-à-dire compressées selon une norme de compression telle que la norme MPEG. Leur taille est suffisante pour permettre de stocker une portion de flux suffisante pour le décodage. Pour celles destinées à stocker des portions du flux de données vidéo, notamment, la taille est suffisante pour stocker au moins un groupe d'images (GOP) au sens de la norme MPEG. De préférence, elles sont allouées, par exemple dans la mémoire système 30, en nombre choisi par l'utilisateur. Le nombre de ces mémoires tampon est toutefois avantageusement limité à un nombre maximum, par exemple douze (ce nombre dépendant des ressources mémoires disponibles).

Un ou plusieurs flux de données audio et un ou plusieurs flux de données vidéo, correspondant respectivement à un ou plusieurs programmes audiovisuels déterminés, sont obtenus à partir d'une ou plusieurs sources respectives. Ces flux sont de préférence des flux élémentaires en paquets (PES) au sens de la norme MPEG. Les données sont typiquement des données en clair (c'est-à-dire désembrouillées).

A la figure 7, on a ainsi représenté un flux de paquets de données audio 81 et un flux de paquets de données vidéo 82 obtenus à partir d'un démultiplexeur correspondant au bloc de transport 14 de la figure 4, et plus exactement à l'une des PTI 142, 143 ou 144 de ce bloc. Par exemple, les flux 81 et 82 peuvent être obtenus par démultiplexage et désembrouillage d'un flux 83 de données codées c'est-à-dire compressées (par exemple un flux de transport au sens de la norme MPEG) préalablement reçu par le démultiplexeur 14, et transmis au boîtier décodeur via un canal de transmission déterminé (satellite, câble ou DVB). En variante, ils peuvent être obtenus par démultiplexage et désembrouillage d'un flux de transport 84 reçu par le démultiplexeur 14, qui est comparable au flux de transport 83 mais qui est lu sur le disque dur 20. Un tel flux de transport peut avoir été préalablement stocké sur le disque dur 20 après avoir été transmis au boîtier décodeur via un canal de transmission déterminé (satellite, câble ou DVB).

De même, on a également représenté un flux de paquets de données audio 85 et un flux de paquets de données vidéo 86 obtenus à partir du disque dur 20 (ou tout autre support numérique de stockage de masse). Par exemple, ces flux 85 et 86 sont directement lus sur le disque dur. Dans ce cas, ils ont par exemple été préalablement stockés sur le disque dur, notamment sous la forme d'un flux élémentaire en paquets (PES) au sens de la norme MPEG, après avoir été produits par le démultiplexeur 14 à partir d'un flux de transport tel que le flux 83 précité.

Dans tous les cas, des portions du flux de paquets de données audio et des portions du flux de paquets de données vidéo sont chargées dans un ensemble de mémoires tampons 70. Le fait qu'il s'agisse de portions de flux en paquets signifie qu'on ne dispose a priori d'aucune information sur l'emplacement des trames audio et des trames vidéo (images) dans les mémoires tampons. On verra plus loin qu'une étape d'analyse des portions de flux ainsi tamponnées permet d'obtenir ces informations. Le fait que les données tamponnées soient des données compressées mais en clair n'est pas un réel inconvénient vis à vis de la prévention du piratage des programmes, dans la mesure où le tamponnement a lieu à un stade très proche du décodage.

Avantageusement, le chargement des mémoires tampons 70 peut être réalisé par le module de gestion 226 (gestionnaire de DMA), selon le modèle du tirer ("Pull Mode", en anglais). De cette façon, le risque de dépassement de capacité ("Overflow" en anglais) des mémoires tampons est évité.

Ensuite, des données audio et des données vidéo sont fournies à partir desdites mémoires tampons en entrée du décodeur audio 130 et du décodeur vidéo 131, respectivement. Avantageusement, cette fourniture est commandée par le gestionnaire de DMA 226, selon le modèle du pousser ("Push Mode"). Néanmoins, il n'en résulte pas un risque de dépassement de capacité des FIFOs 135 (ou CD_UNITs) des décodeurs, car on verra plus loin que c'est justement les décodeurs qui commandent cette fourniture. En outre, le risque inverse de "soupassement" de capacité ("Underflow" en anglais) des décodeurs est sensiblement limité du fait du pré-tamponnement des paquets.

On notera que l'ensemble de mémoires tampons 70 peut recevoir des données compressées de plusieurs sources simultanément. C'est le cas notamment lorsque les démultiplexeurs (PTI) 142, 143 et/ou 144 du bloc de transport 14 (figure 4) délivrent sensiblement en même temps plusieurs flux de paquets de données audio et plusieurs flux de paquets de données vidéo correspondants. C'est aussi le cas lorsqu'un démultiplexeur délivre un flux de paquets de données audio et un flux de paquets de données vidéo correspondant, sensiblement en même temps qu'un autre flux de paquets de données audio et un flux de paquets de données vidéo correspondant sont lus sur le disque dur 20 via l'interface 16.

De plus, plusieurs décodeurs audio tels que le décodeur 130, et/ou plusieurs décodeurs vidéo tels que le décodeur 131 peuvent être prévus.

La règle appliquée par le gestionnaire de DMA 226 est que, à un instant donné, une mémoire tampon de flux élémentaire de l'ensemble 70 n'est associée qu'à au plus une source de données et au plus un consommateur de données (décodeur audio ou vidéo). Dit autrement, un seul chemin entre une source et un décodeur passe par une mémoire tampon déterminée.

Au final, les données vidéo et les données audio ainsi fournies sont décodées à l'aide du décodeur audio 130 et du décodeur vidéo 131, respectivement.

Avantageusement, des lorsque des données proviennent du disque dur 20, le gestionnaire de DMA 226 est piloté par le décodeur vidéo 131. Dit autrement, c'est le décodeur vidéo du décodeur 13 qui est maître du circuit pilote vidéo 10 en mode de lecture sur le disque dur, c'est-à-dire lorsque les données à décoder proviennent du disque dur 20. Ainsi, c'est le décodeur vidéo 131 qui définit le cadencement général du circuit pilote vidéo 10. A cet effet, le décodeur vidéo 131 utilise des évènements correspondant aux impulsions du signal de synchronisation verticale de l'affichage (i.e., le signal Vsync) pour définir une base de temps virtuelle. Il demande les données à décoder au disque dur via le gestionnaire de DMA 226 qui gère les requêtes nécessaires pour commander les mémoires tampons de flux élémentaire par lesquelles les données à décoder transitent. Les requêtes disponibles sont, par exemple :
- une requête pour commander le chargement de données dans une mémoire tampon déterminée ;
- une requête pour commander l'arrêt du chargement de données dans une mémoire tampon déterminée ;
- une requête pour commander la délivrance de données par une mémoire tampon déterminée ;
- une requête pour commander l'arrêt de la délivrance de données par une mémoire tampon déterminée ; et,
- une requête pour commander l'arrêt du chargement de données dans une mémoire tampon et de la fourniture de données par cette mémoire tampon, et pour commander la réinitialisation des pointeurs de cette mémoire tampon.

Des combinaisons de ces cinq requêtes permettent de gérer toutes les situations, afin d'obtenir des données du démultiplexeur (ou de l'un des démultiplexeurs) ou directement du disque dur, et de les délivrer au décodeur (ou à l'un des décodeurs) pour décodage.

On notera qu'un mécanisme de synchronisation adapté, permet au processus de traitement de l'audio de se synchroniser avec le processus de traitement de la vidéo.

La base de temps réelle correspond à une période du signal Vsync par trame (image) affichée. La base de temps virtuelle introduite est définie par le paramètre suivant : "nombre d'images passées par période du signal Vsync", ce qui permet de gérer notamment les diverses vitesses de lecture. Au sens de cette définition, on entend par image passée, une image qui est a été affichée ou sautée.

Par exemple, si la vitesse de lecture est la vitesse nominale (vitesse x1), le "nombre d'images passées par période du signal Vsync" est égal à l'unité. Cela signifie que le nombre de périodes de l'horloge virtuelle est égal au nombre de périodes du signal Vsync. L'horloge virtuelle s'aligne alors sur l'horloge réelle. Si la vitesse de lecture correspond à un affichage de une image sur N (vitesse xN) où N est un nombre entier déterminé, alors cela signifie que N images sont passées à chaque période du signal Vsync, ou encore que N périodes du signal d'horloge virtuelle ont eu lieu pendant une période du signal Vsync.

Ainsi lors d'une commande de gel d'image ("freeze"), ou une commande d'avance/recul d'une image ou un saut ou une perte de synchronisation vidéo, l'opération consiste à mettre le paramètre "nombre d'images passées par période du signal Vsync" à 0 dans le premier cas, et à l'incrémenter/décrémenter d'une unité dans les autres cas.

A chaque arrivée d'une impulsion du signal Vsync (c'est-à-dire à chaque événement de synchronisation verticale de l'affichage, aussi noté VSYNC dans la littérature) correspondant à la base de temps virtuelle, le décodeur 13 vérifie l'état des mémoires tampons 70. Si elles sont vides, il demande au gestionnaire de pipeline 210 de fournir des données aux mémoires tampons 70. Le gestionnaire de pipeline 210 commande alors un accès au disque dur 20 pour qu'il fournisse des données au démultiplexeur 14, qui les fournit ensuite au décodeur 13 via les mémoires tampons 70, le tout étant cadencé.

La vitesse de présentation des trames peut être gérée par le module d'affichage 234 à l'aide d'un paramètre ayant la forme d'une fraction du type M/Q où M désigne le nombre d'images et Q le nombre d'événements de synchronisation verticale de l'affichage (i.e., le nombre d'impulsions du signal Vsync). De préférence, la fraction M/Q est réduite, c'est-à-dire que les nombres M et Q sont premiers entre eux. Cette vitesse est commandée par l'utilisateur. Les commandes de lecture qu'il entre à cet effet agissent directement sur le décodeur vidéo 131 (voir figure 7). Les commandes sont, par exemple, la lecture en marche avant à la vitesse nominale ou à une vitesse accélérée, le gel d'image, la lecture en marche arrière à un vitesse accélérée ou non, l'affichage image par image, etc.

De préférence, les mémoires tampons 70 sont gérées de manière linéaire, notamment circulaire. Toutefois, lorsque l'utilisateur entre une commande de lecture en marche arrière (en vue d'un affichage des images en marche arrière), les mémoires tampons 70 ne sont plus linéaires. Dans ce cas en effet, le décodeur se verrouille sur une mémoire tampon de flux élémentaire déterminée, et il peut accéder de façon aléatoire aux données qu'elle contient.

Dans un mode de mise en oeuvre avantageux, chaque mémoire tampon 70 comprend un premier et un second banc de mémoire. On peut ainsi réaliser une analyse d'une première portion du flux de données stockée dans le premier banc de mémoire d'une mémoire tampon déterminée, en même temps qu'on réalise le décodage des trames audio ou des trames vidéo, respectivement, contenues dans une seconde portion du même flux de données qui est stockée dans le second banc de mémoire de ladite mémoire tampon.

Cette analyse est effectuée par le module de recherche d'en-tête 231 décrit plus haut. Elle consiste à identifier un point d'accès aléatoire ("Random Access Point", ou RAP) d'un groupe de trames décodable et de déterminer au moins pour chacune des trames dudit groupe, des informations incluant l'adresse de la trame dans la mémoire tampon, une estampille temporelle de présentation (PTS) associée à un ordre de présentation de la trame en marche avant. Dans le cas d'une trame vidéo codée suivant la norme MPEG, ces informations comprennent en outre le type I, P ou B de l'image.

## Revendications

1. Procédé de décodage d'un ou plusieurs flux de données audio et d'un ou plusieurs flux de données vidéo obtenus à partir d'une ou plusieurs sources respectives de données codées selon une norme de compression de données telle que la norme MPEG, **caractérisé en ce qu'**il comprend les étapes consistant à :
a) charger des portions dudit flux de données audio et des portions dudit flux de données vidéo dans un ensemble de mémoires tampons (70) ;
b) fournir, à partir desdites mémoires tampons, des données audio et des données vidéo en entrée d'au moins un décodeur audio (130) et d'au moins un décodeur vidéo (131), respectivement ;
c) décoder lesdites données vidéo et lesdites données audio à l'aide dudit décodeur audio et dudit décodeur vidéo, respectivement.

2. Procédé selon la revendication 1, **caractérisé en ce que** le flux de données audio et du flux de données vidéo sont obtenus par lecture sur un support numérique de stockage de masse.

3. Procédé selon la revendication 1, **caractérisé en ce que** le flux de données audio et le flux de données vidéo sont obtenus par lecture sur un support numérique de stockage de masse et démultiplexage d'un flux de transport au sens de la norme MPEG.

4. Procédé selon la revendication 1, **caractérisé en ce que** le flux de données audio et le flux de données vidéo sont obtenus par démultiplexage d'un flux de transport au sens de norme MPEG, ledit flux de transport étant reçu en temps réel via un canal de transmission déterminé.

5. Procédé selon l'une quelconque des revendications précédentes, **caractérisé en ce que** les portions du flux de données audio et les portions du flux de données vidéo qui sont chargées dans les mémoires tampons sont des portions de flux de données en paquets.

6. Procédé selon l'une quelconque des revendications précédentes, **caractérisé en ce que** les portions du flux de données audio et les portions du flux de données vidéo qui sont chargées dans les mémoires tampons sont des portions de flux de données en clair.

7. Procédé selon l'une quelconque des revendications précédentes, **caractérisé en ce que** l'étape a) est réalisée par un module de gestion (226) selon le modèle du tirer.

8. Procédé selon l'une quelconque des revendications précédentes, **caractérisé en ce que** l'étape c) est réalisée par le module de gestion selon le modèle du pousser.

9. Procédé selon l'une quelconque des revendications 7 et 8, **caractérisé en ce que** le module de gestion est cadencé par le décodeur vidéo (131).

10. Procédé selon la revendication 9, **caractérisé en ce que** le module de gestion est cadencé par le décodeur vidéo en synchronisme avec des impulsions d'un signal (Vsync) de synchronisation verticale de l'affichage des images.

11. Procédé selon l'une quelconque des revendications précédentes, **caractérisé en ce que** les mémoires tampons sont gérées de manière linéaire, sauf pour un décodage en vue d'un affichage des images en marche arrière.

12. Procédé selon l'une quelconque des revendications précédentes, **caractérisé en ce que**, chaque mémoire tampon comprenant un premier et un second bancs de mémoire, il comprend une étape d'analyse d'une première portion du flux de données audio ou du flux de données vidéo stockée dans le premier banc de mémoire d'une mémoire tampon déterminée, ainsi qu'une étape de décodage de trames audio ou de trames vidéo, respectivement, contenues dans une seconde portion dudit flux de données audio ou dudit flux de paquets de données vidéo, respectivement, qui est stockée dans le second banc de mémoire de ladite mémoire tampon.

13. Dispositif de décodage d'un ou plusieurs flux de données audio et d'un ou plusieurs flux de données vidéo obtenus à partir d'une ou plusieurs sources respectives de données codées selon une norme de compression de données telle que la norme MPEG, **caractérisé en ce qu'**il comprend :
- un ensemble de mémoires tampons (70) ;
- au moins une source de données audio et de données vidéo (14, figure 7;142,143,144, figure 4) ;
- au moins un décodeur audio (130) et au moins un décodeur vidéo (131) ; et,
- un module de gestion (226) mettant en oeuvre un procédé selon l'une quelconque des revendications précédentes.

14. Dispositif selon la revendication 13, **caractérisé en ce qu'**il comprend des moyens pour obtenir le flux de données audio et le flux de données vidéo par lecture sur un support numérique de stockage de masse (20).

15. Dispositif selon la revendication 13, **caractérisé en ce qu'**il comprend des moyens pour obtenir le flux de données audio et le flux de données vidéo par lecture sur un support numérique de stockage de masse et démultiplexage d'un flux de transport au sens de la norme MPEG.

16. Dispositif selon la revendication 13, **caractérisé en ce qu'**il comprend des moyens pour obtenir le flux de données audio et le flux de données vidéo par démultiplexage d'un flux de transport au sens de la norme MPEG, et des moyens pour recevoir ledit flux de transport en temps réel via un canal de transmission déterminé.

17. Dispositif selon l'une quelconque des revendications 13 à 16, **caractérisé en ce que** les portions du flux de données audio et les portions du flux de données vidéo qui sont chargées dans les mémoires tampons sont des portions de flux de données en paquets.

18. Dispositif selon l'une quelconque des revendications 13 à 17, **caractérisé en ce que** les portions du flux de données audio et les portions du flux de données vidéo qui sont chargées dans les mémoires tampons sont des portions de flux de données en clair.

19. Dispositif selon l'une quelconque des revendications 13 à 18, **caractérisé en ce qu'**il comprend un module de gestion (226) qui réalise le chargement des données dans les mémoires tampons selon le modèle du tirer.

20. Dispositif selon l'une quelconque des revendications 13 à 19, **caractérisé en ce que** le module de gestion réalise la fourniture des données au décodeur audio et au décodeur vidéo selon le modèle du pousser.

21. Dispositif selon l'une quelconque des revendications 19 et 20, **caractérisé en ce que** le module de gestion est cadencé par le décodeur vidéo (131).

22. Dispositif selon la revendication 21, **caractérisé en ce que** le module de gestion est cadencé par le décodeur vidéo en synchronisme avec des impulsions d'un signal (Vsync) de synchronisation verticale de l'affichage des images.

23. Dispositif selon l'une quelconque des revendications 13 à 22, **caractérisé en ce que** les mémoires tampons sont gérées de manière linéaire, sauf pour un décodage en vue d'un affichage des images en marche arrière.

24. Dispositif selon l'une quelconque des revendications 13 à 23, **caractérisé en ce que**, chaque mémoire tampon comprenant un premier et un second bancs de mémoire, il comprend des moyens pour analyser une première portion du flux de données audio ou du flux de données vidéo stockée dans le premier banc de mémoire d'une mémoire tampon déterminée, ainsi que des moyens pour décoder des trames audio ou des trames vidéo, respectivement, contenues dans une seconde portion dudit flux de données audio ou dudit flux de paquets de données vidéo, respectivement, qui est stockée dans le second banc de mémoire de ladite mémoire tampon.

25. Circuit pilote vidéo **caractérisé en ce qu'**il comprend un dispositif selon l'une quelconque des revendications 13 à 24.

26. Boîtier décodeur, **caractérisé en ce qu'**il comprend un circuit pilote vidéo selon la revendication 25.
